Europäisches Patentamt

European Patent Office

Office européen des brevets

(11) Veröffentlichungsnummer: **0 422 589 A1**

(12) **EUROPÄISCHE PATENTANMELDUNG**

(21) Anmeldenummer: **90119350.8**

(22) Anmeldetag: **09.10.90**

(51) Int. Cl.⁵: **G06K 11/18**

(30) Priorität: **12.10.89 CH 3724/89**

(43) Veröffentlichungstag der Anmeldung:
**17.04.91 Patentblatt 91/16**

(84) Benannte Vertragsstaaten:
**AT CH DE DK FR GB IT LI NL SE**

(71) Anmelder: **Maurer Instruments Ltd**
**Rotzbergstrasse 7**
**CH-6362 Stansstad(CH)**

(72) Erfinder: **Maurer, René**
**Wesemlinstrasse 30**
**CH-6006 Luzern(CH)**

(74) Vertreter: **Blum, Rudolf Emil Ernst et al**
**c/o E. Blum & Co Patentanwälte Vorderberg 11**
**CH-8044 Zürich(CH)**

(54) **Positionier- und Zielverfolgungsvorrichtung.**

(57) Als Eingabeeinheit für bewegliche Bildschirmmarkierungen, wie z.B. Cursorn und dergleichen, besitzt die Vorrichtung einen Kippteller 1, der mittels einer elastischen Abstützung 2 auf einer Unterlage 3 angeordnet ist. Durch exzentrischen Druck auf die Kipptellerfläche mittels der Handfläche kann die Bedienungsperson den Kippteller 1 um eine beliebige Raumachse in der Tellerebene kippen. Diese Kippung wird durch Abstandssensoren 4,5 bestimmt und danach in ein Steuersignal für die Cursorbewegung verwandelt. Der Cursor bewegt sich dann auf dem Bildschirm in einer Richtung, welche durch die Richtung der Kippung bestimmt ist und mit einer Geschwindigkeit, die mit zunehmendem Kippwinkel steigt.

Figur 1

# POSITIONIER- UND ZIELVERFOLGUNGSVORRICHTUNG

Die Erfindung betrifft eine Positionier- und Zielverfolgungsvorrichtung zur Erzeugung elektrischer Steuersignale durch manuelle Einwirkung, mit einem Bedienungselement, das um zwei Koordinatenachsen kippbar gelagert und durch manuelle Einwirkung aus seiner Ruhelage heraus in verschiedene Kipplagen bringbar ist und mit einer Lagemessvorrichtung, mittels welcher für jede der Koordinatenachsen der jeweiligen Kipplage entsprechende Steuersignale erzeugbar sind.

Derartige Vorrichtungen werden insbesondere als Eingabesysteme zur interaktiven Bedienung von Programmen, zum Beispiel mittels Cursorn, d.h. bewegbaren Bildschirmmarkierungen verwendet. Zu diesem Zweck sind verschiedene Vorrichtungen in Gebrauch, wovon einerseits die sog. Maus und anderseits Steuerknüppel (Joysticks) die bekanntesten sind. Der Nachteil der sog. Maus besteht vor allem darin, dass zu deren Bedienung eine recht grosse, plane Arbeitsfläche notwendig ist. Im Feldeinsatz und in schmutziger Umgebung lässt sie sich deshalb nicht verwenden. UM diesen Nachteil zu vermeiden, wurde bereits ein System (sog. Track-Ball-Keyboard) vorgeschlagen, bei welchem anstelle der Maus eine Kugel in die gewünschte Cursorbewegungsrichtung gedreht wird. Bei grösseren Cursorbewegungen versucht der sender, mit der ganzen Handfläche die Kugel schneller zu drehen, was auf Grund der konkaven Krümmung der Handinnenfläche schwierig ist. Bei zu trockener oder zu feuchter Handfläche ist die Bedienung mühsam. Soll ferner das Eingabesystem an der (vertikalen) Frontplatte eines Geräts angeordnet werden, so ist dieses System ungeeignet.

Weiter sind als Eingabemittel die bereits erwähnten Steuerknüppel oder Joysticks bekannt. Diese sind mechanisch relativ aufwendig und als hervorstehende Teile im Feldeinsatz beschädigungsanfällig. Soll das Eingabesystem in ein Gerät integriert werden, so sind am Gerät angeordnete Joysticks ebenfalls unerwünscht, indem das Gerät damit unhandlich und leicht beschädigbar wird.

Es stellt sich deshalb die Aufgabe, ein möglichst einfaches und kostengünstiges Eingabesystem zu schaffen, welches leicht zu bedienen und wenig störungsanfällig ist und das sich sowohl für den Einbau in eine Gerätefrontplatte eignet, als auch in Form einer separaten Eingabeeinheit realisierbar ist.

Die zur Lösung dieser Aufgabe vorgesehenen Merkmale sind in den Patentansprüchen definiert.

Die beanspruchte Positionier- und Zielverfolgungsvorrichtung hat den Vorteil, dass sie sehr flach aufgebaut werden kann und sich damit für den Einbau in die Frontplatte von Geräten eignet.

Die Betätigung erfolgt mit der vorderen Handfläche bzw. den Fingern, die auf das platten- oder kuppelförmige Bedienungselement aufgelegt werden und dieses gemäss der gewünschten Cursorbewegung in entsprechende Richtungen mehr oder weniger kippt.

Gemäss der bevorzugten Ausführung der Erfindung wird die Kipplage des plattenförmigen Bedienungselements mittels Abstandssensoren bestimmt, so dass Kippwinkel-abhängige Steuersignale erzeugbar sind. Dies erlaubt es, den Cursor in Abhängigkeit vom Kippwinkel beliebig schnell über den Bildschirm zu bewegen. Je nachdem, wie stark das plattenförmige Bedienungselement gekippt wird, nimmt der Cursor in der entsprechenden Kipprichtung eine kleinere oder grössere Geschwindigkeit an.

Nachfolgend wird ein Ausführungsbeispiel der Erfindung anhand der beiliegenden Zeichnungen näher beschrieben. Darin zeigen:

Fig. 1 eine vergrösserte Querschnittsansicht senkrecht zur Plattenebene der Vorrichtung;

Fig. 2 eine Aufsicht auf die Vorrichtung etwa in der Originalgrösse;

Fig. 3 eine Schnittansicht entlang der Linie III-III in Fig. 1;

Fig. 4 eine Schnittansicht entlang der Linie IV-IV in Fig. 1, und

Fig. 5 eine schematische Darstellung der elektrischen Komponenten.

Fig. 6 eine vergrösserte Querschnittsansicht einer zweiten Ausführung mit kuppelförmigem Bedienungselement.

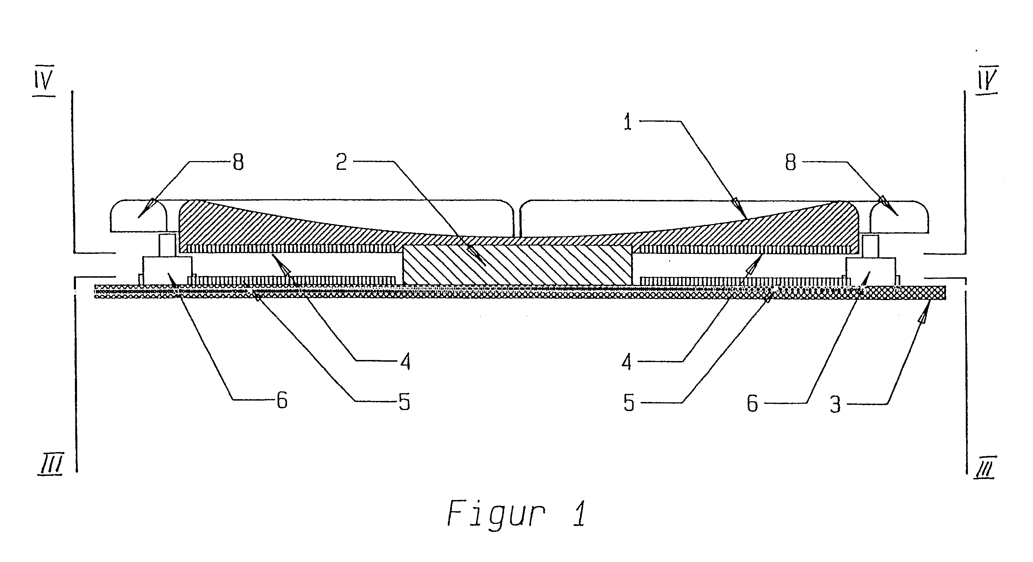

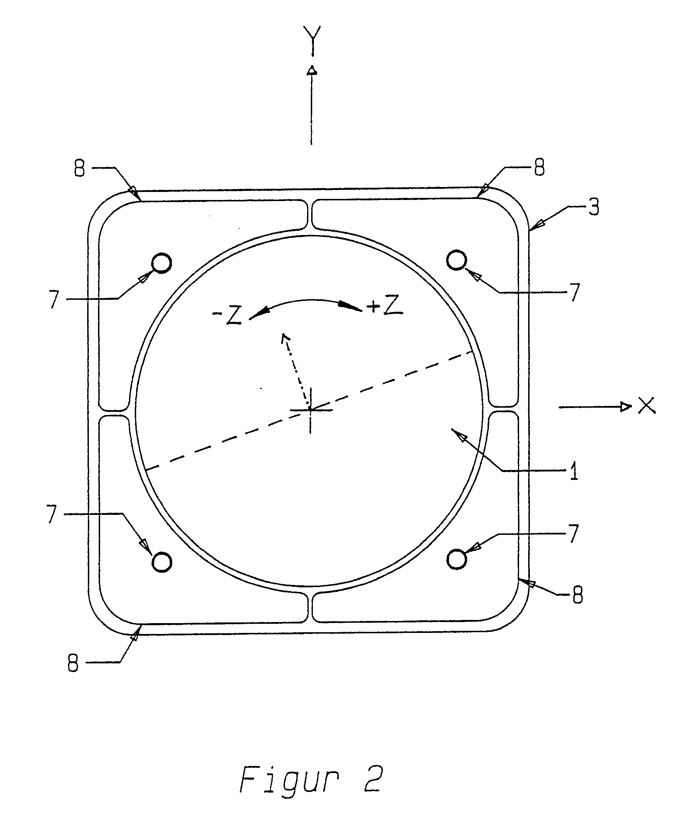

Wie zunächst am besten der Fig. 2 entnehmbar ist, die eine Aufsicht auf die Positionier und Zielverfolgungsvorrichtung gemäss einer ersten Variante zeigt, besitzt diese ein plattenförmiges Bedienungselement 1, im folgenden Kippteller 1 genannt. Dieser Kippteller 1 hat eine leicht konkave Oberfläche (vgl. Fig. 1) und eine Grösse, die es erlaubt, die Finger einer Hand so auf den Kippteller 1 zu legen, dass er durch unterschiedliche Belastung sehr präzis in eine gewollte Richtung gekippt werden kann. Dazu ist der Kippteller 1 in seinem Zentrum mit einem elastischen Gummizylinder 2 auf einer Bodenplatte 3 gelagert und damit verbunden. Der Gummizylinder 2 lässt Kippbewegungen in allen Richtungen zu und stellt den Kippteller 1 in seine Ruhelage zurück. Die jeweilige Kippachse verläuft dabei etwa durch das Zentrum des Kipptellers 1, kann aber im übrigen beliebig ausgerichtet sein, wie in Fig. 2 beispielsweise strichliert angedeutet ist. Dient die Vorrichtung zur Bewegung eines Cursors auf einem Bildschirm, so verläuft dessen Bewegungsrichtung in einem Koordinatensystem x, y auf dem Bildschirm, das demjenigen der Positioniervorrichtung entspricht, senkrecht zum Verlauf der Kippachse in diesem Koordinatensystem. Dies ist in Fig. 2 durch eine strichpunktierte Linie angedeutet, welche die entsprechende Bewegungsrichtung des Cursors auf dem Bildschirm darstellt.

Diese Bewegungsrichtung kann natürlich jederzeit durch eine Veränderung der Kipplage geändert werden, wobei sie dann wieder senkrecht zur neuen Kippachse verläuft. Dabei muss die auf dem Teller 1 auf liegende Bedienungshand nicht verschoben, sondern nur leicht in die gewünschte Richtung belastet werden, was eine exakte und einfache Kontrolle der Cursorbewegung erlaubt.

Diese Beschreibung der Funktionsweise vorausgeschickt, soll nun weiter auf den Aufbau der Vorrichtung eingegangen werden.

Wie bereits erläutert, wird der Cursor oder eine entsprechende Anzeige gemäss der Kippung des Tellers 1 gesteuert. Hierzu ist es zunächst erforderlich, die jeweilige Kipplage des Tellers 1 festzustellen.

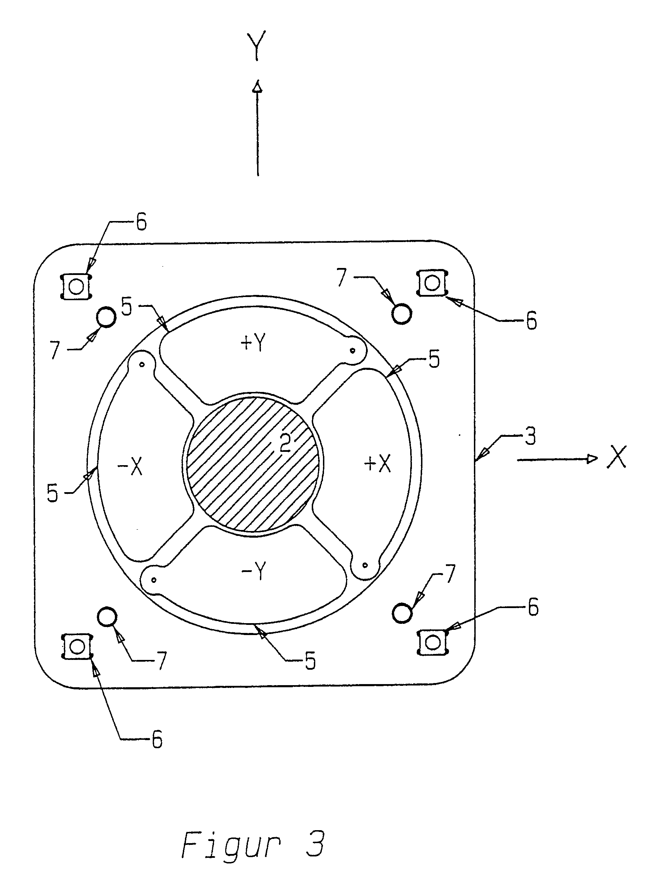

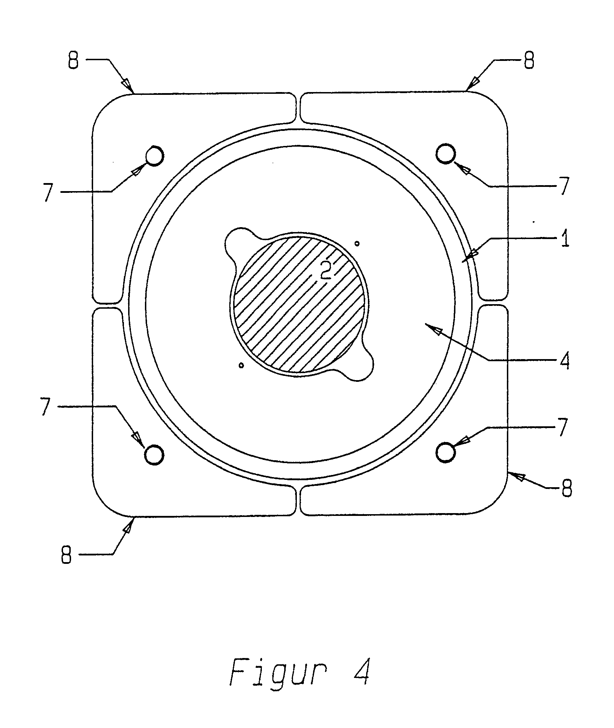

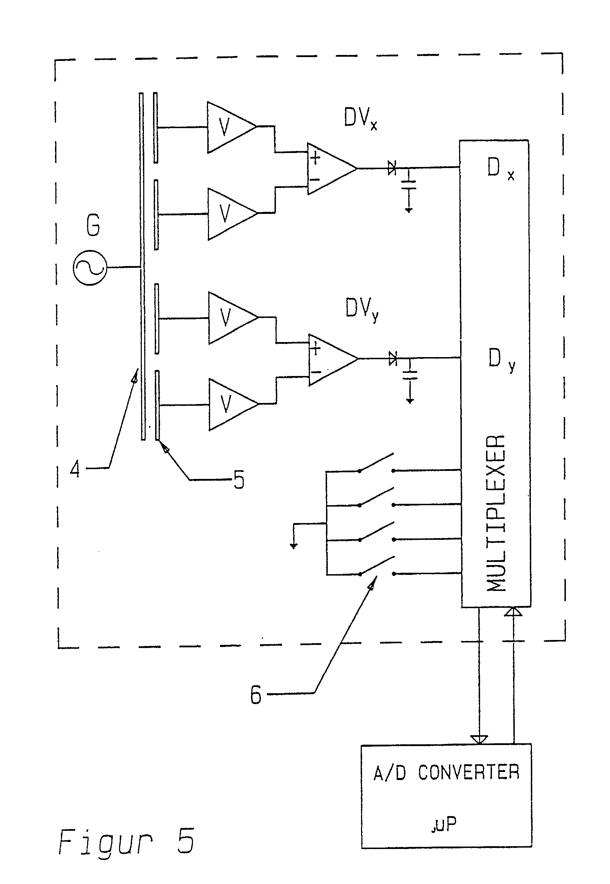

Dies wird vorzugsweise mittels einer berührungsfreien Kippwinkelbestimmung zwischen dem Kippteller 1 und der Bodenplatte 3 realisiert, und zwar dadurch, dass an mehreren Stellen ein für den jeweiligen Abstand zwischen dem Kippteller 1 und der Bodenplatte charakteristisches Signal erzeugt und ausgewertet wird. Die entsprechenden Abstandssensoren sind im vorliegenden Ausführungsbeispiel durch einen an der Tellerunterseite angeordneten Schallgeber 4 in Form eines Piezofilms sowie auf der Bodenplatte 3 sektorenweise angeordnete Schallsensoren 5, ebenfalls in Form von Piezofilmen gebildet. Entsprechende Piezofilme sind unter der Handelsmarke KYNAR bei der Firma Pennwalt Corp., USA, erhältlich. Wie anhand des Schaltbilds gemäss Fig. 5 noch näher erläutert wird, ist der Schallgeber-Piezofilm 4 an eine Wechselspannungsquelle angeschlossen. In der Piezofolie wird die elektrische Leistung in mechanische Schwingungen umgesetzt, so dass vom Schallgeber-Piezofilm ein Schallfeld ausgeht. Vorzugsweise ist der Schallgeber-Piezofilm 4, wie in Fig. 4 ersichtlich, ringförmig um den Gummizylinder 2 herum angeordnet, so dass im gesamten Ringraum unter dem Kippteller ein Schallfeld vorhanden ist. Auf der Bodenplatte 3 sind sektorenweise vier Schallsensor-Piezofilme 5 als Schallempfänger angeordnet, wie besonders in Fig. 3 ersichtlich ist. Sie erzeugen ein Wechselspannungssignal entsprechend der jeweils auf sie auftreffenden Schallenergie. Je näher der Schallgeber bei einem Schallsensor liegt, desto grösser wird dessen Wechselspannungssignal. Der Kippwinkel des Kipptellers 1 um die x- und die y-Achse wird nun über die empfangene, differentielle Schallintensität jeweils zweier gegenüberliegender, an der x- und y-Achse gespiegelter Schallempfängerpaare +y, -y bzw. +x, -x ermittelt. Damit wird also auf jeder Messachse (welche hier den Koordinatenrichtungen entsprechen, was indessen nicht notwendig ist), jeweils die Differenz der Signale der zwei auf der Messachse liegenden Schallempfängern bestimmt. Schwankungen im Absolutwert der Schallenergie bzw. des Schallgebers spielen damit keine Rolle und das Differenzsignal ist ein direktes Mass für die Winkelneigung $\alpha x$, bzw. $\alpha y$ des Kipptellers 1 entlang der Messachse x bzw. y. Dieses Differenzsignal Dx, bzw. Dy kann damit zur Steuerung der Bewegungsgeschwindigkeit Vx bzw. Vy des Cursors in Richtung der betreffenden Koordinatenachse x bzw. y verwendet werden.

Dabei nimmt vorzugsweise die Geschwindigkeit V überproportional mit dem Kippwinkel zu, z.B. gemäss einer Exponentialfunktion, so dass z.B. gilt: $|V| \sim e^{\alpha}$

Damit können mittels einer kleinen Kippung sehr kleine Bewegungsgeschwindigkeiten für den Cursor erzielt werden, was eine präzise Positionierung desselben erlaubt, während bei zunehmender Kippung die Geschwindigkeit rasch zunimmt und umgekehrt. Dies bewirkt anderseits auch, dass sich der Cursor bei zufälligen Berührungen oder beim Auflegen der Hand auf den Kippteller nur wenig bewegt. Wegen der erwähnten Lagerung des Kipptellers 1 auf dem Gummizylinder 2 entspricht die Geschwindigkeitszunahme des Cursors mit zunehmendem Kippwinkel bei der Bedienung einer zunehmendem Rückstellkraft. Wird der Kippteller 1 losgelassen, so kippt er selbsttätig in seine Ruhelage zurück und der Cursor hält sofort an.

Es sei hier darauf hingewiesen, dass die beschriebene Kippwinkelbestimmung mittels Schallgeber und Schallsensoren zwar wegen der einfachen und flachen Bauweise sehr vorteilhaft ist, jedoch nicht die einzige Möglichkeit Messung darstellt. So kann in entsprechender Weise z.B. eine kapazitive oder induktive Abstandsbestimmung gewählt werden oder die Abstandsbestimmung kann mittels Hallsensoren erfolgen. Schliesslich ist auch eine Kippwinkelbestimmung durch Ablenkung eines Lichtstrahls an einem Spiegelsystem denkbar.

In Fig. 5 ist schematisch die Schaltung der Vorrichtung dargestellt, wobei die Vorrichtung selbst durch eine strichlierte Linie angedeutet ist. Wie erkennbar, ist die Schallgeber-Piezofolie 4 an einen Frequenzgenerator G angeschlossen, der eine hochfrequente Wechselspannung mit einer Frequenz über der menschlichen Hörschwelle erzeugt. Die Schallsensoren 5 sind je mit einem Verstärker V verbunden. Die verstärkten Sensorsignale der zwei zur jeweils gleichen Koordinatenrichtung gehörenden Schallsensoren +x, -x, bzw. +y, -y gelangen in einen Differenzverstärker DVx bzw. DVy, wo das jeweilige Differenzsignal Dx bzw. Dy erzeugt und in einer Gleichrichterschaltung gleichgerichtet wird. Die Differenzverstärker und noch zu beschreibende Tastschalter 6 sind an einen Multiplexer angeschlossen, der die entsprechenden Signale abfragt und im Multiplex an einen externen Rechner uP übermittelt. Im Rechner uP werden die Signale in einem A/D-Converter digitalisiert, woraus dann die eigentlichen Steuersignale für den Cursor erzeugt werden.

Die Tastschalter 6 dienen in an sich bekannter Weise der Befehlseingabe. Sie sind an der Peripherie des Kipptellers 1 angeordnet, wie Figur 3 zu entnehmen ist, und sind mit Abdeckungen 8 versehen (Fig. 2,4), welche der besseren Bedienung der Taster dienen. Ferner ist in jeder Abdeckung 8 je eine Leuchtdiode 7 oder dergl. angeordnet, welche der Markierung der aktiven Taster dient und sich softwaremässig steuern lässt.

Während das vorliegende Beispiel eine Steuerung in zwei Dimensionen vorsieht, gestattet die patentgemässe Vorrichtung indessen zusätzlich auch die Steuerung von Cursorn oder dergleichen in weiteren Dimensionen, z.B. entlang einer Z-Achse in dreidimensionalen Bildschirmdarstellungen. Wie in Fig. 2 mittels Pfeil angedeutet, kann der Kippteller 1 hierzu z.B. in der Plattenebene um sein Zentrum gedreht werden, wobei eine Drehung im Uhrzeigersinn dem Cursor eine Bewegung in der Richtung +Z und eine Drehung im Gegenuhrzeigersinn eine solche in der Richtung -Z vermittelt. Zur Realisierung, welche in den Figuren nicht gezeigt ist, kann z.B. die Schallgeberfolie 4 ebenfalls in einzelne Sektoren unterteilt sein. Mittels einer der Tasten 6 kann ein Z-Modus eingeschaltet werden, in welchem nur ein Sektor der Schallgeberfolie 4 und ein darunter liegender Sektor der Schallsensorfolie 5 aktiv ist. Eine Verdrehung der erwähnten Art wird dann als Intensitätsänderung vom entsprechenden Schallsensor registriert und als Steuersignal für die Bewegung des Cursors in Z-Richtung ausgewertet werden, wobei die Lage des Cursors in der x-y-Ebene festgehalten wird. Der Gummizylinder 2 dient in diesem Fall als Torsionsfeder, welche den Kippteller 1 ebenfalls jeweils in seine Ruhelage zurückstellt. Eine entsprechende Steuerung in einer weiteren Dimension lässt sich natürlich auch durch Translation des Kipptellers z.B. in die Richtungen +y und -Y realisieren, wobei der Gummizylinder 2 als Schubfeder wirkt.

Die beschriebene Vorrichtung kann, wie im vorliegenden Beispiel dargestellt, als selbständige Einheit ausgestaltet und über ein Kabel mit einem Rechner verbunden sein. Wie aus Fig. 5 ersichtlich ist, sind dabei nur relativ wenige Leitungen (insgesamt zwei Signalleitungen und je nach verwendeter Elektronik zwei bis drei Leitungen für die Speisespannung) erforderlich, was den elektrischen Aufbau vereinfacht. Das Gerät kann auch mit Batterie gespiesen sein und die Daten mittels Infrarotsender übermittelt werden, so dass ein Verbindungskabel entfällt. Anderseits zeigt sich aus Fig. 1, dass der flache Aufbau der Vorrichtung sich gut für den Einbau in die Frontplatte von Geräten eignet, insbesondere von feldtauglichen, tragbaren Datenspeicher-oder Verarbeitungsgeräten, wie z.B. digitale Speicheroszilloskope ( sog. Transientenrecorder) und dergleichen.

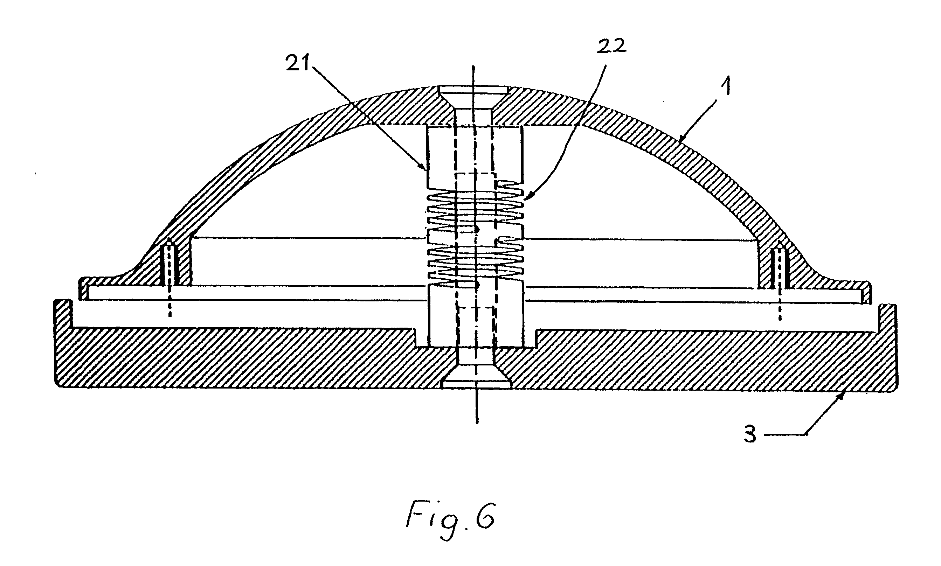

In der Figur 6 wird eine zweite Ausführungsvariante der erfindungsgemässen Vorrichtung gezeigt, die sich in ihren elektronischen und messtechnischen Aspekten nicht wesentlich vom bereits beschriebenen Ausführungsbeispiel unterscheidet. Im Gegensatz zu jenem ist hier das Bedieungselement 1 jedoch kuppelförmig ausgestaltet, was eine bessere Bedienung mit der Hand erlaubt, welche auf die Kuppel gelegt werden kann. Das kuppelförmige Bedienungselement schafft dabei auch ausreichend Platz für die Lagerung desselben auf der Bodenplatte 3 mittels einer Wellenkupplung 21. Dabei handelt es sich um ein hohlzylindrisches Element, z.B. aus Aluminium, Stahl oder Kunststoff, dessen Wandung mit einer sprialförmige Schlitzung 22 versehen ist (vergl. US-PS 3 068 666). Diese Wellenkupplung 21 gestattet eine Kippung des Bedienungselements 1 mit exakter Rückstellung und ist unempfindlich gegen Ermüdung. Im übrigen kann auf die vorstehende Beschreibung verwiesen werden.

**Ansprüche**

1. Positionier- und Zielverfolgungsvorrichtung zur Erzeugung elektrischer Steuersignale durch manuelle Einwirkung, mit einem Bedienungselement (1) , das um zwei Koordinatenachsen kippbar gelagert und durch manuelle Einwirkung aus seiner Ruhelage heraus in verschiedene Kipplagen bringbar ist und mit einer Lagemessvorrichtung (4,5), mittels welcher für jede der Koordinatenachsen der jeweiligen Kipplage entsprechende Steuersignale erzeugbar sind, dadurch gekennzeichnet, dass das Bedienungselement (1) platten- oder kuppelförmig ausgebildet und derart auf einer Unterlage (3) gelagert ist, dass es durch Druck auf die Plattenebene um Raumachsen kippbar ist, die im wesentlichen in der Plattenebene oder parallel dazu verlaufen und dass die Kipplage des Bedienungselements bezüglich der Unterlage durch eine Abstandsmessvorrichtung ermittelt wird.

2. Vorrichtung nach Anspruch 1, dadurch gekennzeichnet, dass das platten- oder kuppelförmige Bedienungselement (1) elastisch auf der Unterlage abgestützt ist, wobei das Bedienungselement durch die elastische Abstützung (2) jeweils selbsttätig in seine Ruhelage rückstellbar ist.

3. Vorrichtung nach einem der vorangehenden Ansprüche, dadurch gekennzeichnet, dass das platten- oder kuppelförmige Bedienungselement (1) im wesentlichen parallel zur Unterlage (3) angeordnet ist und durch Druck auf die Plattenebene aus der Parallellage heraus kippbar ist.

4. Vorrichtung nach einem der vorangehenden Ansprüche, dadurch gekennzeichnet, dass die Raumachsen, um welche das Bedienungselement (1) kippbar ist, im wesentlichen durch sein Zentrum verlaufen.

5. Vorrichtung nach einem der vorangehenden Ansprüche, dadurch gekennzeichnet, dass die Lagemessvorrichtung (4,5) mindestens zwei berührungslose Abstandssensoren aufweist, deren Sensorsignale an mindestens zwei Stellen für den jeweiligen Abstand zwischen dem Bedienungselement (1) und der Unterlage (3) charakteristisch sind.

6. Vorrichtung nach einem der vorangehenden Ansprüche, dadurch gekennzeichnet, dass dem Bedienungselement (1) je eine darin verlaufende x- und eine y-Koordinatenachse zugeordnet sind, derart, dass durch Kippung um die x-Achse ein der y-Achse zugeordnetes Steuersignal (Dy) erzeugt wird und umgekehrt.

7. Vorrichtung nach Anspruch 4, dadurch gekennzeichnet, dass die Lagemessvorrichtung (4,5) zu jeder Koordinatenachse zwei in dieser Achse angeordnete Abstandssensoren aufweist und dass die Bestimmung der jeweiligen Kipplage bezüglich einer Achse mittels der Differenz der Sensorsignale (Dx bzw. Dy) erfolgt.

8. Vorrichtung nach einem der vorangehenden Ansprüche 5 bis 7, dadurch gekennzeichnet, dass die Abstandssensoren (4,5) einen Schallgeberteil (4) und mindestens je einen Schallaufnehmerteil (5) aufweisen, wobei der eine Teil am Bedienungselement (1) und der andere Teil an der Unterlage (3) angeordnet ist und wobei der Schallaufnehmer den vom jeweiligen Abstand abhängigen Schalldruck in ein Sensorsignal umwandelt.

9. Vorrichtung nach Anspruch 8, dadurch gekennzeichnet, dass der Schallgeberteil (4) und der Schallaufnehmerteil (5) der Abstandssensoren durch eine Piezofolie gebildet sind, wobei die Schallgeberfolie an eine Wechselspannungsquelle angeschlossen ist, welche ein hochfrequentes, ausserhalb des Hörbereichs befindliches Wechselspannungsfeld erzeugt.

10. Vorrichtung nach einem der vorangehenden Ansprüche, dadurch gekennzeichnet, dass das Bedienungselement (1) zusätzlich um eine Achse senkrecht zur Plattenebene drehbar angeordnet und eine Lagemessvorrichtung vorgesehen ist, mittels welcher ein der jeweiligen Drehlage entsprechendes Steuersignal erzeugbar ist, welches einer weiteren Koordinatenachse zugeordnet ist.

11. Vorrichtung nach einem der vorangehenden Ansprüche, dadurch gekennzeichnet, dass sie mit einer Schaltung (μP) zur Erzeugung von Steuersignalen für einen Bildschirmcursor oder dergleichen versehen ist.

Figur 1

EP 0 422 589 A1

Figur 2

Figur 3

Figur 4

Figur 5

EP 0 422 589 A1

21

22

1

Fig.6

3

Europäisches
Patentamt

# EUROPÄISCHER
# RECHERCHENBERICHT

Nummer der Anmeldung

**EP 90 11 9350**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | WO-A-8 906 023   (NCR CORP.)(29-06-1989)<br>* Figuren 1,2,4,5; Seite 4, Zeile 1 - Seite 5, Zeile 34; Seite 4, Zeile 23 - Seite 7, Zeile 6 *<br>– – – | 1-7,10,11 | G 06 K 11/18 |
| Y | EP-A-0 266 829   (HUKA DEVELOPMENT B.V.)(11-05-1988)<br>* Figuren 1,2a,4,6; Spalte 5, Zeile 53 - Spalte 7, Zeile 8; Spalte 9, Zeilen 5-34; Spalte 11, Zeilen 5-17 *<br>– – – – – | 1-7,10,11 | |
| | | | **RECHERCHIERTE SACHGEBIETE (Int. Cl.5)**<br><br>G 06 K 11 |

Der vorliegende Recherchenbericht wurde für alle Patentansprüche erstellt

| Recherchenort | Abschlußdatum der Recherche | Prüfer |
|---|---|---|
| Den Haag | 16 Januar 91 | WEISS P. |

KATEGORIE DER GENANNTEN DOKUMENTE
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie,
    übereinstimmendes Dokument